# EUROPÄISCHE PATENTSCHRIFT

(11) **EP 1 725 502 B1**
(45) Veröffentlichungstag und Bekanntmachung des Hinweises auf die Patenterteilung: **02.09.2009**
(21) Anmeldenummer: 05714165.7
(22) Anmeldetag: 09.03.2005
(51) Int. Cl.: C03C 4/00, C03C 3/097, C03C 3/095, C03C 3/093

(54) **BLEI- UND BARIUMFREIES KRISTALLGLAS**
LEAD AND BARIUM-FREE CRYSTAL GLASS
VERRE DE CRISTAL EXEMPT DE PLOMB ET DE BARYUM

(30) Priorität: 19.03.2004 AT 4842004
(43) Veröffentlichungstag der Anmeldung: 29.11.2006
(73) Patentinhaber: D. Swarovski & Co., 6112 Wattens (AT)
(72) Erfinder: SPRACHMANN, Gerold, A-6114 Kolsassberg (AT); MAIER, Johannes, A-6020 Innsbruck (AT)
(74) Vertreter: Torggler, Paul Norbert
(86) Internationale Anmeldenummer: PCT/AT2005/000083
(87) Internationale Veröffentlichungsnummer: WO 2005/090252

(56) Entgegenhaltungen:
- WO-A-00/09456
- US-B1- 6 391 810

## Beschreibung

Die Erfindung bezieht sich auf ein blei- und bariumfreies Kristallglas mit einem Brechungsindex von wenigstens 1,55, mit in Gew. % mehr als 50 % SiO₂, mehr als 0,6 % und weniger als 4 % B₂O₃, weniger als 3 % K₂O, mehr als 12 % und weniger als 15 % Na₂O, mehr als 4 % und weniger als 11 % CaO, mehr als 4,5 % ZnO, mehr als 0,25 % und weniger als 5 % Al₂O₃, weniger als 5 % TiO₂ sowie weniger als 2 % MgO.

Da Blei für den menschlichen Körper giftig ist, wird die Verwendung dieses Metalls zunehmend auch dort abgelehnt, wo es aus naturwissenschaftlicher Sicht zweifellos unschädlich ist. Dies trifft insbesondere auch die seit Jahrhunderten zur Erzielung eines hohen Brechungsindex übliche Verwendung von PbO in wertvollen Gläsern für Dekorations- und Gebrauchsartikel.

In den letzten Jahren wurden zahlreiche Vorschläge gemacht, um zumindest die optischen Eigenschaften von Kristallglas auch ohne die Verwendung von Blei bzw. Barium zu erreichen. Die eingangs definierte Gattung von Gläsern zeichnet sich dabei dadurch aus, dass der Gehalt an Natrium jenen an Kalium wesentlich übersteigt, da auf diese Weise eine hohe chemische Beständigkeit des Glases gewährleistet ist und dieses in eine niedrige hydrolytische Klasse eingeordnet werden kann.

Insbesondere wurde ein gattungsgemäßes Glas in EP 1 074 522 (Beispiel 2) geoffenbart. Dieses bekannte Glas weist einen SiO₂-Gehalt von 66,8 % auf. Um dennoch knapp auf den Mindestwert von n=1,55 zu kommen, enthält dieses Glas eine Gesamtmenge von TiO₂ und La₂O₃, welche üblicherweise zu einem Geibstich von Gläsern führt. Auch wegen des hohen Arsengehaltes erfüllt das bekannte Glas nicht die Auflage, alle an sich giftigen Bestandteile zu vermeiden.

Der Erfindung liegt die überraschende Erkenntnis zugrunde, dass man gegenüber dem dargestellten Stand der Technik eine wesentliche Erhöhung des Brechungsindex erreichen kann, die umso signifikanter ist, je weiter man den Gehalt an SiO₂ unter 60 % absenkt und gleichzeitig den Gehalt an ZnO über 8 % erhöht.

US 6,391,810 beansprucht Werte von SiO₂ von 59,0 bis 71,0 % sowie für ZnO von 0,01 bis 11,0 %. Trotz der Überschneidung im Randbereich lässt sich daraus die Lehre, den Gehalt von ZnO über 8 % zu erhöhen und gleichzeitig den Gehalt von SiO₂ unter 60 % abzusenken, nicht ableiten Die weit von den erfindungsgemäßen Grenzen entfernten Ausführungsbeispiele der Vorveröffentlichung erreichen daher auch nur ausnahmsweise durch die Verwendung von hochgiftigem Arsenoxid den angesprochenen Brechungsindex.

In WO 00/09456 sind die Grenzen von ZnO mit 15 bis 30 % angegebene, wodurch wiederum alle Ausführungsbeispiele einen gegenüber der Erfindung wesentlich erhöhten Gehalt von ZnO aufweisen. Dennoch wird nur ausnahmsweise der gewünschte Brechungsindex erreicht, entweder durch Verwendung von Bariumoxid, welche die Erfindung gerade vermeiden will oder durch einen Gehalt an ZnO. welcher das Glas instabil und kristallisationsanfällig macht.

In DE-B 808 754 (Beispiel 3) ist ein bariumfreies Glas zur Herstellung von Mehrfokus-Brillengläsern erwähnt, welches Gehalte von 50 % SiO₂ und 12 % ZnO aufweist. Dieses Glas weist jedoch einen Gehalt von 10 % ZrO₂ auf, welcher nach der Lehre der Vorveröffentlichung nur durch Verwendung von TiO₂ oder BaO gesenkt werden kann. Für Gebrauchsgläser wäre ein Glas mit hohem Gehalt an ZrO₂ nicht nur an sich zu teuer, die hohe Verarbeitungstemperatur würde zusätzlich die Kosten des fertigen Produktes erheblich steigern.

Für Dekorations- und Gebrauchsartikel kommt ein bariumfreies Glas nur in Betracht, wenn die Gehalte sowohl an TiO2 wie an ZrO2 niedrig sind. Überraschend wurde gefunden, dass es möglich ist, den gewünschten Brechungsindex zu erreichen, wenn ein Glas der eingangs definierten Art gekennzeichnet ist durch Gehalte von weniger als 60 % SiO₂ und 8 -16 % ZnO, mit der Maßgabe, dass der Gesamtgehalt der Oxide von Pb, Ba, As unter 0,1 %, der Gesamtgehalt der Oxide von Ti und La unter 5 % und der Gesamtgehalt der Oxide von Nb, Ta, Yb, Y, W, Bi, Zr unter 5 % liegt, wobei höchstens je 1 % Oxide von Nb, Ta, Yb und je 3 % der Oxide von Y, W, Bi, Zr enthalten sind.

Der geringe Gesamtgehalt der Oxide von Pb, Ba und As entspricht dabei der Aufgabe, die durch die Erfindung gelöst werden soll. Die Beschränkung des Gesamtgehaltes der Oxide von Ti und La ergibt sich durch die Aufgabe, den Brechungsindex zu erhöhen, ohne die Transmission zu verschlechtern.

Ein besonderer Vorteil der Erfindung liegt an sich darin, dass sie es erlaubt, auf weitere giftige und/oder teure Bestandteile zu verzichten. Oxide von Nb, Ta, Yb, Y, W, Bi, Zr sollten daher nur insoweit zugesetzt werden, als ein allenfalls angestrebte höherer Brechungsindex dies erfordert.

Die Wirkung von ZnO im erfindungsgemäßen Zusammenhang ist ähnlich jener von CaO, weshalb besonders gute Ergebnisse erzielt werden, wenn der Gesamtgehalt von ZnO und CaO über 15 % beträgt.

Strontium kommt glastechnisch an sich eine geringe Bedeutung zu, sodass seine Verwendung im Rahmen der Erfindung keineswegs notwendig ist. Da seine Eigenschaften denen von CaO ähneln, kann man CaO jedoch teilweise durch SrO ersetzen, wenn man die etwa zehnfachen Kosten in Kauf nimmt.

Eine echte Verbesserung im Rahmen des Grundgedankens der Erfindung erzielt man durch die Verwendung von Li₂O. Verwendet man dieses in einem Ausmaß von mindestens 0,5 %, verringert sich die Schmelz- und Verarbeitungstemperatur des Glases. Trotz des ohnehin schon hohen Gehaltes an Alkalien verschlechtert sich dabei die hydrolytische Klasse nicht, zumindest dann nicht, wenn die Summe von Na₂O und Li₂O unter 17 % liegt.

Auch weitere Bestandteile (beispielsweise SnO) können in geringen Mengen vorgesehen sein, doch sind sie an sich unerwünscht, weshalb man zweckmäßigerweise vorsieht, dass der Gesamtgehalt aller übrigen Bestandteile, abgesehen von Läutermitteln, wie Sb₂O₃, und Entfärbungsmitteln, wie Nd₂O₅ und Er₂O₃, unter 2 % liegt.

Anschließend werden drei Ausführungsbeispiele dargestellt, welche in den Rahmen der Erfindung fallen.

| Beispiel 1 | | Beispiel 2 | | Beispiel 3 | |
|---|---|---|---|---|---|
| Oxide: | Gew.% | Oxide: | Gew.% | Oxide: | Gew.% |
| SiO2 | 59,68 | SiO2 | 58,94 | SiO2 | 50,94 |
| B2O3 | 2,99 | B2O3 | 2,99 | B2O3 | 2,99 |
| K2O | 2,00 | K20 | 1,99 | K2O | 1,00 |
| Na2O | 13,47 | Na2O | 13,45 | Na2O | 13,45 |
| Li2O | 1,00 | Li2O | 2,00 | U20 | 2,00 |
| CaO | 6,50 | CaO | 6,00 | CaO | 10,00 |
| MgO | 0,72 | MgO | 0,72 | MgO | 0,72 |
| ZnO | 9,00 | ZnO | 9,00 | ZnO | 15,00 |
| Al2O3 | 0,42 | Al2O3 | 0,42 | Al2O3 | 2,42 |
| Y2O3 | 2,00 | ZrO2 | 2,00 | TiO2 | 0,99 |
| TiO2 | 2,00 | TiO2 | 1,99 | Sb2O3 | 0,50 |
| Sb2O3 | 0,22 | Sb2O3 | 0,50 | | |
| Dichte: | 2,71 | Dichte: | 2,72. | Dichte: | 2,82 |
| Brechungsindex: | 1,553 | Brechungsindex: | 1.560 | Brechungsindex: | 1,571 |

Die obigen Beispiele sind nach fallendem Gehalt an SiO₂ geordnet. Es ist leicht ersichtlich, dass damit die Dichte und der Brechungsindex zunehmen. Besonders bemerkenswert ist, dass die besten optischen Eigenschaften mit einer Zusammensetzung erhalten wurden, welche zur Gänze auf die Oxide von Nb, Ta, Yb, Y, W, Bi, Zr verzichtet (Beispiel 3). Gleichzeitig wurde auch der Gehalt an Titanoxid bei diesem Beispiel so niedrig gehalten, dass die Transmission im ganzen sichtbaren Bereich konstant ist und ein Geibstich damit vermieden wird. Zurückzuführen ist dieses positive Ergebnis auf den hohen Gehalt an ZnO in Verbindung mit dem ebenfalls hohen Gehalt an CaO.

## Patentansprüche

1. Blei- und bariumfreies Kristallglas mit einem Brechungsindex von wenigstens 1,55, mit in Gew. % mehr als 50 % SiO₂, mehr als 0,6 % und weniger als 4 % B₂O₃, weniger als 3 % K₂O, mehr als 12 % und weniger als 15 % Na₂O, mehr als 4 % und weniger als 11 % CaO, mehr als 4,5 % ZnO, mehr als 0,25 % und weniger als 5 % Al₂O₃, weniger als 5 % TiO₂ sowie weniger als 2 % MgO, **gekennzeichnet durch** Gehalte von weniger als 60 % SiO₂ und 8 - 16 % ZnO, mit der Maßgabe, dass der Gesamtgehalt der Oxide von Pb, Ba, As unter 0,1 %, der Gesamtgehalt der Oxide von Ti und La unter 5 % und der Gesamtgehalt der Oxide von Nb, Ta, Yb, Y, W, Bi, Zr unter 5 % liegt, wobei höchstens je 1 % Oxide von Nb, Ta, Yb und je 3 % der Oxide von Y, W, Bi, Zr enthalten sind.

2. Kristallglas nach Anspruch 1, **dadurch gekennzeichnet, dass** der Gesamtgehalt von ZnO und CaO über 15 % beträgt.

3. Kristallglas nach Anspruch 1 oder 2, **dadurch gekennzeichnet, dass** CaO teilweise durch SrO ersetzt ist.

4. Kristallglas nach einem der Ansprüche 1 bis 3, **dadurch gekennzeichnet, dass** es zusätzlich 0,5 - 3,0 % Li₂O enthält.

5. Kristallglas nach Anspruch 4, **dadurch gekennzeichnet, dass** die Summe von Na₂O und Li₂O unter 17 % liegt.

6. Kristallglas nach einem der Ansprüche 1 bis 5, **dadurch gekennzeichnet, dass** der Gesamtgehalt aller übrigen Bestandteile, abgesehen von Läutermitteln, wie Sb₂O₃, und Entfärbungsmitteln, wie Nd₂O₅ und Er₂O₃, unter 2 % liegt.

## Claims

1. A lead- and barium-free crystal glass having a refractive index of at least 1.55, with in % by weight more than 50% SiO₂ more than 0,6% and less than 4% B₂O₃, less than 3% K₂O, more than 12% and less than 15% Na₂O, more than 4% and less than 11% CaO, more than 4.5% ZnO, more than 0.25% and less than 5% Al₂O₃, less than 5% TiO₂ and less than 2% MgO, **characterised by** contents of less than 60% SiO₂ and 8 - 16 % ZnO, with the proviso that the total content of the oxides of Pb, Ba and As is below 0.1 %, the total content of the oxides of Ti and La is below 5% and the total content of the oxides of Nb, Ta, Yb, Y, W, Bi and Zr is below 5%, wherein at most 1 % oxides of Nb, Ta and Yb respectively and 3% of the oxides of Y, W, Bi and Zr respectively are included.

2. A crystal glass according to claim 1 **characterised in that** the total content of ZnO and CaO is over 15%.

3. A crystal glass according to claim 1 or claim 2 **characterised in that** CaO is partially replaced by SrO.

4. A crystal glass according to one of claims 1 to 3 **characterised in that** it additionally contains 0.5 - 3.0% Li₂O.

5. A crystal glass according to claim 4 **characterised in that** the sum of Na₂O and Li₂O is below 17%.

6. A crystal glass according to one of claims 1 to 5 **characterised in that** the total content of all other constituents apart from purifying agents such as Sb₂O₃ and decoloration agents such as Nd₂O₅ and Er₂O₃ is below 2%.

## Revendications

1. Cristal exempt de plomb et de baryum avec un indice de réfraction d'au moins 1,55, avec en % en poids plus de 50 % de SiO₂, plus de 0,6 % et moins de 4 % de B₂O₃, moins de 3 % de K₂O, plus de 12 % et moins de 15 % de Na₂O, plus de 4 % et moins de 11 % de CaO, plus de 4,5 % de ZnO, plus de 0,25 % et moins de 5 % de Al₂O₃, moins de 5 % de TiO₂ ainsi que moins de 2 % de MgO, **caractérisé par** des teneurs de moins de 60 % de SiO₂ et de 8 à 16 % de ZnO, avec la spécification que la teneur totale en oxydes de Pb, Ba, As se trouve en dessous de 0,1 %, que la teneur totale en oxydes de Ti et de La se trouve en dessous de 5 % et que la teneur totale en oxydes de Nb, Ta, Yb, Y, W, Bi, Zr se trouve en dessous de 5 %, sachant qu'au plus 1 % de chaque oxyde Nb, Ta, Yb et 3 % de chaque oxyde Y, W, Bi, Zr y sont contenus.

2. Cristal selon la revendication 1, **caractérisé en ce que** la teneur totale en ZnO et en CaO est supérieure à 15 %.

3. Cristal selon la revendication 1 ou 2, **caractérisé en ce que** le CaO est partiellement remplacé par du SrO.

4. Cristal selon l'une quelconque des revendications 1 à 3, **caractérisé en ce qu'**il contient en plus 0,5 à 3,0 % de Li₂O.

5. Cristal selon la revendication 4, **caractérisé en ce que** la somme de Na₂O et de Li₂O se trouve en dessous de 17 %.

6. Cristal selon l'une quelconque des revendications 1 à 5, **caractérisé en ce que** la teneur totale en tous les composants restants, à l'exception des agents d'affinage comme Sb₂O₃. et des décolorants comme Nd₂O₅ et Er₂O₃, se trouve en dessous de 2 %.
